# EUROPÄISCHE PATENTANMELDUNG

(11) **EP 4 170 331 A1**
(43) Veröffentlichungstag der Anmeldung: **26.04.2023**
(21) Anmeldenummer: 22201094.4
(22) Anmeldetag: 12.10.2022
(51) Int. Cl.: G01N 23/223

(54) **VERFAHREN UND MESSGERÄT ZUR MESSUNG VON MESSOBJEKTEN MITTELS RÖNTGENFLUORESZENZ**

(30) Priorität: 22.10.2021 DE 102021127537
(71) Anmelder: Helmut Fischer GmbH Institut für Elektronik und Messtechnik, 71069 Sindelfingen (DE)
(72) Erfinder: Leibfritz, Martin, 75392 Deckenpfronn (DE)
(74) Vertreter: Mammel und Maser Patentanwälte PartG mbB

(57) **Zusammenfassung**

Die Erfindung betrifft ein Verfahren zur Messung von Messobjekten (27) auf einem Messtisch (21) eines Messgerätes (11) mittels Röntgenfluoreszenz, bei dem auf den Messtisch (21) zumindest ein Messobjekt (27) aufgelegt wird, bei dem von zumindest einem Bereich des Messtisches (21), auf dem das zumindest eine Messobjekt (27) aufliegt, ein Übersichtsbild mit einer optischen Einrichtung (33) erfasst wird, bei dem der Typ des Messobjektes (27) aus dem Übersichtsbild oder aus einer Kennung (38), die auf dem zumindest einem Messobjekt (27) vorgesehen oder benachbart dazu auf dem Messtisch (21) positioniert ist, ermittelt wird, dem die Lage und/oder die Ausrichtung des zumindest eine Messobjektes (27) auf dem Messtisch (21) aus dem Übersichtsbild ermittelt wird, bei dem für das zumindest eine erfasste Messobjekt (27) eine in einer Datenverarbeitungseinrichtung 32 abgespeicherte Messaufgabe ausgewählt und gestartet wird, bei dem zumindest eine Messstelle (P1, P2, P3, P4, P5) des zumindest einen Messobjektes (27) in einem Messpunkt (26) einer Röntgenfluoreszenzrichtung (23) positioniert und von der zumindest einen Messstelle (P1, P2, P3, P4, P5) des Messobjektes (27) zumindest ein Messwert ermittelt wird, und bei dem der zumindest eine Messwert der zumindest einen Messstelle (P1, P2, P3, P4, P5) des Messobjektes (27) mit einem in der Datenverarbeitungseinrichtung (32) hinterlegten Sollwert verglichen und das jeweilige Messergebnis für die zumindest eine Messstelle (P1, P2, P3, P4, P5) des Messobjektes (27) ausgegeben wird.

## Beschreibung

Die Erfindung betrifft ein Verfahren zur Messung von Messobjekten auf einem Messtisch eines Messgerätes mittels Röntgenfluoreszenz sowie ein Messgerät.

In vielen Bereichen der industriellen Fertigung ist es erforderlich, die Qualität von Messobjekten zu prüfen und zu überwachen. Bei der Qualitätskontrolle kann zum einen eine Materialanalyse durchgeführt werden. Zum anderen können Messungen von Schichten, insbesondere Schichtdicken, auf einem Messobjekt der Qualitätsprüfung zugrunde liegen. Zur Bestimmung der Schichtdicke und zur Analyse der Beschichtung oder des Materials eines Messobjektes ist allgemein bekannt, ein Röntgenfluoreszenzverfahren einzusetzen. Dabei wird von einer Strahlungsquelle einer Röntgenfluoreszenzeinrichtung ein Primärstrahl auf einen Messpunkt eines Messtisches gerichtet, zu dem das Messobjekt ausgerichtet ist oder auf dem das Messobjekt aufliegt. Eine von der Messoberfläche des Messobjektes emittierte Sekundärstrahlung wird von einem Detektor der Röntgenfluoreszenzeinrichtung erfasst und an eine Steuerungseinrichtung bzw. Auswerteeinrichtung weitergeleitet.

Solche Messgeräte erfordern aufgrund von Strahlenschutzverordnungen, dass ein Messraum während der Messung des Messobjektes geschlossen ist. Deshalb weisen solche Messgeräte einen Gehäusedeckel oder Gehäuseöffnung auf, die für die Zugänglichkeit des Messobjektes zum Messraum geöffnet und geschlossen werden kann.

Bei der Durchführung von Qualitätskontrollen wird das jeweilige Messobjekt auf einem Messtisch manuell und in einer definierten Lage und Ausrichtung aufgelegt, um eine Messung durch Anfahren von einzelnen Messpunkten auf dem Messobjekt durchzuführen. Solche Qualitätsprüfungen sind aufgrund der vorgegebenen Positionierung der Messobjekte auf dem Messtisch zeitaufwendig.

Der Erfindung liegt die Aufgabe zugrunde, ein Verfahren zur Messung von zumindest einem Messobjekt auf einem Messtisch eines Messgerätes mittels Röntgenfluoreszenz sowie ein Messgerät zur Durchführung des Verfahrens vorzuschlagen, so dass eine effiziente Durchführung der Qualitätskontrolle an Messobjekten ermöglicht ist.

Diese Aufgabe wird durch ein Verfahren zur Messung von zumindest einem auf einem Messtisch eines Messgerätes aufliegendem Messobjekt gelöst, bei dem von zumindest einem Bereich des Messtisches, auf dem das Messobjekt aufliegt, ein Übersichtsbild mit einer optischen Einrichtung erfasst wird, bei dem der Typ des Messobjektes aus dem Übersichtsbild oder aus einer Kennung, die auf dem zumindest einem Messobjekt vorgesehen oder benachbart dazu positioniert ist, ermittelt wird, bei dem die Lage und/oder die Ausrichtung des zumindest ein Messobjektes auf dem Messtisch aus dem Übersichtsbild ermittelt wird, bei dem für das zumindest eine erfasst Messobjekt eine in einer Datenverarbeitungseinrichtung gespeicherte Messaufgabe durch die Steuerungseinrichtung ausgewählt und gestartet wird, bei dem zumindest eine Messstelle des zumindest einen Messobjektes in einem Messpunkt einer Röntgenfluoreszenzeinrichtung positioniert und von der zumindest einen Messstelle des Messobjektes ein Messwert erfasst wird und bei dem der zumindest eine Messwert des zumindest einen Messobjektes mit einem in der Datenverarbeitungseinrichtung hinterlegten Sollwert verglichen und das jeweilige Messergebnis für die zumindest eine Messstelle des zumindest einen Messobjektes ausgegeben wird.

Durch die Messobjekterkennung ist ermöglicht, dass ein oder mehrere Messobjekte beliebig auf dem Messtisch des Messgerätes aufgelegt werden können. Dies kann manuell erfolgen oder durch eine Handhabungseinrichtung. Aufgrund dieser beliebigen Anordnung und/oder Ausrichtung des zumindest eines Messobjektes auf den Messtisch kann eine Zeitersparnis beim Bestücken des Messtisches ermöglicht sein. Darauf wird zumindest ein Messobjekt durch ein Übersichtsbild optisch erfasst und dem Typ nach erkannt oder mittels einer dem Messobjekt zugeordneten Kennung erfasst. Die Lage und/oder die Ausrichtung des zumindest einen Messobjektes kann ebenso aus dem Übersichtsbild ermittelt werden, so dass alle Voraussetzungen vorliegen, um darauffolgend eine automatisierte Messung durchzuführen, bei welcher eine oder mehrere Messstellen des zumindest einen Messobjektes zu einem Messpunkt des Messtisches im Messgerät aufeinanderfolgend positioniert werden, um Messwerte von den jeweiligen Messstellen des Messobjektes durch die emittierte Sekundärstrahlung zu erfassen und auszuwerten. Durch einen Vergleich der erfassten Messwerte von der zumindest einen Messstelle des zumindest einen Messobjektes mit abgespeicherten Sollwerten können die Messergebnisse ausgegeben und angezeigt werden, ob diese innerhalb oder außerhalb eines Wertebereiches liegen, der für die Qualitätsprüfung zugrunde gelegt ist.

Bevorzugt ist vorgesehen, dass von dem gesamten Messtisch, der in einem Messraum innerhalb dem geschlossenen Gehäuse positioniert ist, ein Übersichtsbild erfasst wird. Dadurch kann mit nur einem Bild durch die optische Einrichtung eine Erfassung von allen auf dem Messtisch sich befindlichen Messobjekten erfolgen. Gleichzeitig kann dadurch die Lage und/oder die Ausrichtung des zumindest einen Messobjektes innerhalb des Messtisches durch einen Bildauswertealgorithmus ermittelt werden.

Insbesondere ist vorgesehen, dass bei der Erkennung einer auf dem Messtisch aufgelegten oder eines auf dem Messobjekt angebrachten Kennung diese Kennung ausgelesen wird und die in dieser Kennung abgelegte Messaufgabe gestartet und durchgeführt wird. Eine solche Kennung kann beispielsweise ein QR-Code, ein Barcode oder dergleichen sein.

Des Weiteren kann vorteilhafterweise vorgesehen sein, dass für die anstehende Messaufgabe, bei der ein oder mehrere Messstellen des Messobjektes abgefragt werden, jeweils ein Toleranzbereich zugeordnet wird. In Abhängigkeit der Messaufgabe oder von Qualitätsanforderungen können Toleranzbereiche größer oder kleiner gewählt werden. Beispielsweise können mehrere Messstellen die gleichen Toleranzbereiche und weitere Messstellen an demselben Messobjekt davon abweichende Toleranzbereiche zugeordnet werden, so dass auch entsprechend der Funktion der Messobjekte eine daran angepasste Qualitätsprüfung erfolgen kann.

Insbesondere ist vorgesehen, dass aus der Lage und/oder der Ausrichtung des zumindest einen Messobjektes ein Messobjekt-Koordinatensystem ermittelt wird. Die Koordinaten des Messobjekt-Koordinatensystems werden durch eine Transformation in ein Koordinatensystem des Messtisches überführt. Dadurch kann durch die Steuerungseinrichtung eine Verfahrbewegung des Messtisches in einer X- und/oder Y-Richtung in der Messtischebene angesteuert werden und die einzelnen Messstellen an dem Messobjekt definiert zu einem Messpunkt ausgerichtet werden, auf welchem die Primärstrahlung der Röntgenfluoreszenzeinrichtung ausgerichtet ist.

Vorteilhafterweise ist vorgesehen, dass nach der Erfassung der Messwerte von der zumindest einen Messstelle des Messobjektes die Messwerte in einer Gut- oder Schlechtanzeige ausgegeben werden. Dadurch wird für das Bedienpersonal in einfacher Weise ersichtlich, welches der Messobjekte auf dem Messtisch als Schlechtteil auszusortieren ist. Darüber hinaus kann ausgegeben werden, welche Messstelle an dem Messobjekt außerhalb des Toleranzbereiches liegt. Sofern mehrere Messobjekte wegen derselben Messstelle als Schlechtteil aussortiert werden, kann daraufhin ein gezielter Rückschluss auf einen möglichen Fehler in der Produktion der Messobjekte gezogen werden.

Insbesondere ist vorgesehen, dass in dem Übersichtsbild ein Bereich des Messtisches oder des gesamten Messtisches jeder Messstelle des Messobjektes zugeordnet die Gut- oder Schlechtanzeige ausgegeben wird. Vorzugsweise wird zusätzlich an der jeweiligen Messstelle der ermittelte Messwert ausgegeben. Beispielsweise kann eine sogenannte Pass-Fail-Anzeige vorgesehen sein, durch welche eine leichte Erkennung für das Bedienpersonal gegeben ist. Die innerhalb des Toleranzbereiches liegende Messstelle wird mit "Pass" gekennzeichnet und die außerhalb des vorgegebenen Toleranzbereiches liegenden Messwerte an der jeweiligen Messstelle werden mit "Fail" gekennzeichnet.

Nach der Erfassung oder Ermittlung der durchzuführenden Messaufgabe für das zumindest eine Messobjekt kann vorteilhafterweise eine Kalibrierung des Messgerätes auf die durchzuführende Messaufgabe angesteuert und durchgeführt werden, bevor die Messaufgabe gestartet wird. Dies weist den Vorteil auf, dass die Kalibrierung in Abhängigkeit der ausgewählten Messaufgabe durchgeführt werden kann, wodurch eine verbesserte Messqualität erzielt werden kann.

Bevorzugt ist vorgesehen, dass zu Beginn der Messaufgabe der Messraum des Gehäuses geöffnet wird und nach dem Bestücken des Messtisches mit dem zumindest einen Messobjekt durch ein Startsignal die Messaufgabe gestartet, der Messraum des Gehäuses geschlossen und die Messaufgabe durchgeführt wird und nach Durchführung der Messaufgabe der Messraum des Gehäuses zur Entnahme des zumindest einen Messobjektes geöffnet wird. Dadurch kann die Messung des oder der auf dem Messtisch aufliegenden Messobjekte autonom erfolgen, so dass das Bedienpersonal während der Durchführung der Messung Zeit zur Verfügung steht, um beispielsweise ein weiteres Messgerät zu überwachen oder für eine weitere Messung vorzubereiten.

Des Weiteren ist bevorzugt vorgesehen, dass der Messraum des Gehäuses durch einen schwenkbar, verschiebbar oder verfahrbar angesteuerten Gehäusedeckel mit einem Motor geöffnet und geschlossen wird. Dadurch kann der Automatisierungsgrad bei der Durchführung solcher Messungen erhöht sein.

Des Weiteren ist bevorzugt vorgesehen, das zum erleichterten Bestücken und Entnehmen von auf dem Messtisch zu positionierenden Messobjekten der Messtisch in eine Be- und Entladestation verfahren wird, in welcher der Messtisch zumindest teilweise aus dem verschließbaren Messraum des Gehäuses herausgeführt wird. Die Verfahrbewegung des Messtisches in dieser Be- und Entladestation kann über den Motor erfolgen, der den Messtisch auch für eine Verfahrbewegung ansteuert, um zumindest ein Messobjekt bezüglich der zumindest einen zu erfassenden Messstelle innerhalb des Messraumes zu verfahren.

Das Verfahren zur Durchführung der ausgewählten Messaufgabe wird bevorzugt durch ein Tastelement am Gehäuse gestartet. Dadurch wird eine einfache Bedienung ermöglicht.

Die der Erfindung zugrundeliegende Aufgabe wird des Weiteren durch ein Messgerät zur Messung von Messobjekten mittels Röntgenfluoreszenz gelöst, welches ein Gehäuse sowie einen in dem Gehäuse vorgesehenen Messtisch umfasst, der relativ zu einem Messpunkt einer Röntgenfluoreszenzeinrichtung in dem Gehäuse verfahrbar ist, wobei eine Strahlungsquelle in dem Gehäuse zu dem Messpunkt ausgerichtet ist und das Gehäuse einen Gehäusedeckel oder eine Gehäuseöffnung zum Öffnen und Schließen eines Messraumes umfasst, in dem der Messtisch positionierbar ist, wobei das Messgerät eine Steuerungseinrichtung mit einer Datenverarbeitungseinrichtung zur Durchführung des Verfahrens nach einem der vorhergehenden Ausführungsformen aufweist.

Eine solches Messgerät vereinfacht die Handhabung und Durchführung der Messaufgabe für das zumindest eine Messobjekt. Darüber hinaus kann ein erhöhter Automatisierungsgrad erzielt werden, da der Typ des Messobjektes, die Lage und/oder die Ausrichtung des zumindest einen Messobjektes aus einem Übersichtsbild einer optischen Einrichtung erfassbar ist, um darauffolgend die Messaufgabe anzusteuern und durchzuführen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen
- Figur 1: eine perspektivische Ansicht eines Messgerätes,
- Figur 2: eine schematische Schnittansicht des Messgerätes gemäß Figur 1,
- Figur 3: eine schematische Ansicht auf einen Messtisch des Messgerätes gemäß Figur 1 mit Messobjekten,
- Figur 4: eine schematische Teilansicht des Messtisches mit dem Messobjekt und dessen ausgewählten Messstellen,
- Figur 5: eine schematische Teilansicht des Messtisches mit dem Messobjekt und den Messstellen zugeordneten Messergebnissen, und
- Figur 6: ein schematisches Ablaufdiagramm zur Durchführung einer Messung mit dem Messgerät gemäß Figur 1.

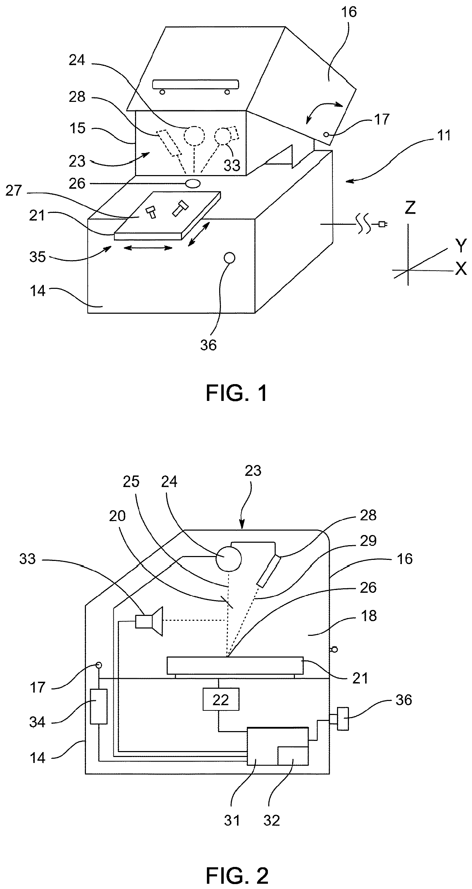

In Figur 1 ist ein Messgerät 11 perspektivisch dargestellt. Die Figur 2 zeigt eine schematische Seitenansicht des Messgerätes gemäß Figur 1 in einer Schnittansicht. Dieses Messgerät 11 dient zur Durchführung einer Messung an Messobjekten mittels Röntgenfluoreszenz. Die Messung mittels Röntgenfluoreszenz kann zur Schichtdickenmessung von Beschichtungen auf Messgegenständen und/oder zur Materialanalyse des Messobjektes eingesetzt werden.

Das Messgerät 11 umfasst ein Gehäuse 12 mit einem Gehäuseunterteil 14 und einem Gehäuseoberteil 15 sowie einen Gehäusedeckel 16. Der Gehäusedeckel 16 ist beispielsweise schwenkbar um eine Schwenkachse 17 gelagert, so dass ein in dem Gehäuse 12 vorgesehener Messraum 18 zugänglich ist. Alternativ kann der Gehäusedeckel 16 auch durch eine weitere Mechanik relativ zum Gehäuse 12 verfahrbar oder verschiebbar sein. Auch kann an Stelle eines schwenkbaren Gehäusedeckels 16 eine Gehäuseöffnung vorgesehen sein, die eine Zugänglichkeit in den Messraum 18 ermöglicht.

Das Gehäuseunterteil 14 nimmt an einer Oberseite einen Messtisch 21 verfahrbar auf. Dieser Messtisch 21 ist in X- und Y-Richtung durch einen Motor 22 verfahrbar angetrieben. Vorzugsweise ist der Messtisch 21 durch einen Kreuztisch oder dergleichen zum Gehäuseunterteil 14 verfahrbar geführt.

In dem Gehäuseoberteil 15 ist eine Röntgenfluoreszenzeinrichtung 23 vorgesehen. Diese umfasst eine Strahlungsquelle 24, durch welche eine Primärstrahlung 25 auf einen Messpunkt 26 gerichtet ist. Einzelne im Primärstrahl 25 angeordnete Komponenten, wie beispielsweise ein Shutter, ein Primärfilter und/oder ein Kollimator sind nicht näher dargestellt. Zum Messpunkt 26 ausgerichtet können einzelne Messobjekte 27, welche beispielsweise auf dem Messtisch 21 aufliegen, zur Durchführung einer Messung positioniert werden. Benachbart zur Strahlungsquelle 24 ist ein Detektor 28 vorgesehen, durch welchen eine von dem Messobjekt 27 emittierte Sekundärstrahlung 29 erfasst wird. Sowohl die Strahlungsquelle 24 als auch der Detektor 28 sind mit einer Steuerungseinrichtung 31 verbunden.

Die Röntgenfluoreszenzeinrichtung 23 kann sowohl oberhalb als auch unterhalb des Messpunktes 26 positioniert sein, um die Primärstrahlung von oben oder unten auf den Messpunkt 26 zu richten.

Die Steuerungseinrichtung 31 umfasst eine Datenverarbeitungseinrichtung 32, sodass Messaufgaben abgespeichert und aufgerufen werden können und/oder dass ermittelte Messwerte erfasst, abgespeichert und/oder ausgewertet und/oder in einer Anzeige oder dergleichen ausgegeben werden können.

In dem Gehäuseoberteil 15 ist eine optische Einrichtung 33 wie beispielsweise eine CCD-Kamera, vorgesehen, durch welche ein Übersichtsbild von zumindest einem Bereich des Messtisches 21 oder vorzugsweise von dem gesamten Messtisch 21 erfassbar ist. Die optische Einrichtung 33 kann zum Beispiel über einen Umlenkspiegel 20 von dem Messpunkt 26 und/oder von dem Messtisch 21 Bilder erfassen. Der Gehäusedeckel 16 kann über einen Motor 34, der wiederum mit der Steuerungseinrichtung 31 verbunden ist, automatisch geöffnet und geschlossen werden. Dadurch ist eine einfache Zugänglichkeit in den Messraum 18 gegeben. An dem Gehäuseunterteil 14 ist bevorzugt Tastelement 36 vorgesehen, durch welches die Steuerungseinrichtung 31 gestartet oder stillgestellt und/oder angesteuert werden kann.

Vorteilhafterweise ist an das Messgerät 11 ein Display, Bildschirm oder dergleichen anschließbar. Auch kann an dem Gehäuse 12 eine Anzeige, ein Display oder ein Bildschirm vorgesehen sein.

Zum erleichterten Bestücken des Messtisches 21 mit dem zumindest einen Messobjekt 27 für die nachfolgende Messaufgabe kann der Messtisch 21 in eine Be- und Entladeposition 35 überführbar sein. In diese Be- und Entladeposition 35 ist der Messtisch 21 gegenüber dem Gehäuseunterteil 14 zumindest teilweise herausgefahren. Durch den Gehäusedeckel 16, der von dem Gehäuseunterteil 14 abhebbar ist, kann eine verbesserte Zugänglichkeit zu dem Messtisch 21 gegeben sein, der in der Be- und Entladeposition 35 angeordnet ist. Diese Be- und Entladeposition 35 des Messtisches ist in Figur 1 dargestellt.

Zur Durchführung der anstehenden Messaufgabe wird der Messtisch 21 aus der Be- und Entladeposition 35 in eine Arbeitsposition 37 verfahren. Diese Arbeitsposition 37 ist in Figur 2 dargestellt. Der Messtisch 21 ist vollständig innerhalb des Messraumes 18 positioniert. Nach dem Schließen des Gehäusedeckels 16 ist der Messtisch 21 vollständig innerhalb des geschlossenen Messraumes 18 positioniert.

Alternativ kann vorgesehen sein, dass die Be- und Entladeposition 35 und die Arbeitsposition 37 dieselbe Position sind. In diesem Fall ist der Gehäusedeckel 16 vorzugsweise gegenüber dem Gehäuseunterteil 14 abhebbar oder seitlich verschiebbar, sodass wiederum eine gute Zugänglichkeit zum Be- und Entladen des Messtisches 21 mit dem zumindest einem Messobjekt 27 gegeben ist. Das oder die Messobjekte 27 können manuell als auch automatisiert, beispielsweise mit einer ansteuerbaren und/oder programmierbaren Handhabungseinrichtung, auf den Messtisch 21 aufgelegt werden.

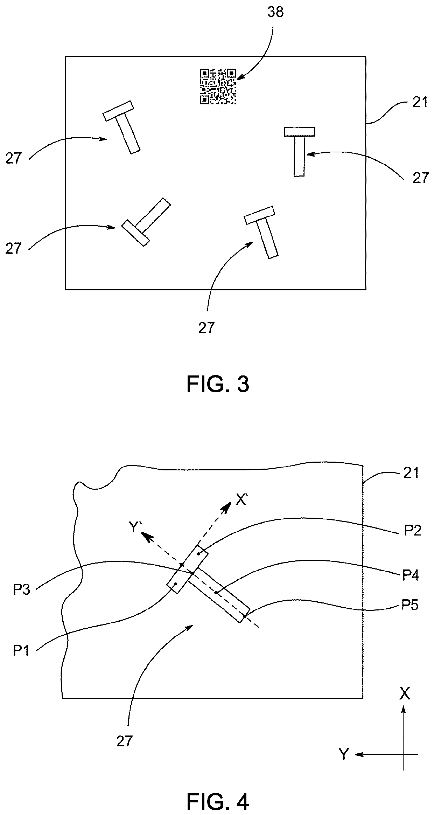

In Figur 3 ist eine schematische Ansicht von oben auf den Messtisch 21 dargestellt, auf welchem mehrere Messobjekte 27 aufgelegt sind. Bevorzugt können mehrere oder alle Messobjekte 27 aus einem Fertigungslos, die zu prüfen sind, auf dem Messtisch 21 positionierbar sein. Die Lage und/oder die Ausrichtung kann dabei beliebig erfolgen. Es kann eine sogenannte chaotische Anordnung der Messobjekte 27 auf dem Messtisch 21 vorgesehen sein, wobei diese nicht übereinanderliegend oder aneinander anliegend auf dem Messtisch 21 positioniert sein dürfen. Ergänzend kann auf dem Messtisch 21 eine Kennung 38 positionierbar sein. Eine solche Kennung 38 kann auch auf oder an dem Messobjekt 27 vorgesehen sein. Auch kann die Kennung 38 separat auf dem Messtisch 21 positioniert sein. Diese Kennung 38 kann verschiedentliche Informationen beinhalten. Beispielsweise einen Code, durch welchen in der Datenverarbeitungseinrichtung 32 eine abgespeicherte Messaufgabe für ein bestimmtes Messobjekt 27 aufgerufen wird. Auch können Informationen umfasst sein, wie beispielsweise der Typ des Messobjektes und/oder die Messaufgabe, und/oder die für die Messaufgabe zugrunde zu legende Toleranzen. Bei einer solchen Kennung 38 kann es sich beispielsweise um ein QR-Code oder einen Barcode oder sonstige Kennzeichnungen handeln. Eine derartige Kennung 38 wird durch die optische Einrichtung 33 erfasst, so dass die erfassten Daten an die Steuerungseinrichtung 31 für eine nachfolgende Messaufgabe weitergegeben werden.

In Figur 4 ist eine schematische Ansicht von dem einen Messobjekt 27 auf dem Messtisch 21 dargestellt. Der Messtisch 21 ist innerhalb eines X-/Y-Messtisch-Koordinatensystems verfahrbar. Jedes Messobjekt 27 hat ein eigenes Koordinatensystem mit einer X'-Achse und einer Y'-Achse. Zur automatisierten Durchführung der Messaufgabe wird das X'-/Y'-Messobjekt-Koordinatensystem in ein X-/Y-Messtisch-Koordinatensystem transformiert, so dass darauffolgend durch die Steuerungseinrichtung 31 eine gezielte Verfahrbewegung des Messtisches 21 ansteuerbar ist, um beispielsweise zumindest eine Messstelle P1, P2, P3, P4, P5 des Messobjektes 27 zum Messpunkt 26 auszurichten, um die Messung an der zumindest einen Messstelle P1, P2, P3, P4, P5 durchzuführen. Die Anzahl der Messstellen jedes Messobjektes 27 sowie der Ort der zumindest einen Messstelle auf dem Messobjekt 27 steht in Abhängigkeit der Messaufgabe und/oder der Qualitätskontrolle und kann für jedes Messobjekt 27 beliebig ausgewählt und bestimmt werden.

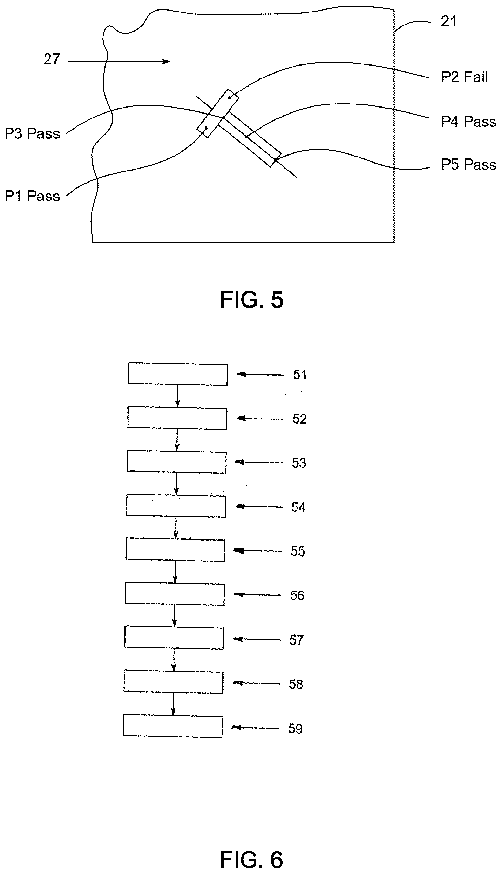

In Figur 5 ist eine schematische Ansicht von dem Messobjekt 27 nach der Durchführung der Messung und einer Auswertung der Messwerte durch einen Vergleich mit abgespeicherten Sollwerten dargestellt. Die Darstellung kann in einer Anzeige, einem Display oder einem Bildschirm ausgegeben werden.

Im Beispielfall erfolgt die Darstellung der Messwerte durch eine sogenannte Pass-Fail-Anzeige. Den Messstellen P1, P3, P4 und P5 des Messobjektes 27 ist beispielsweise der Begriff "Pass" zugefügt, d.h., dass diese Messstellen als gut befunden werden bzw. der erfasste Messwert der Messstelle innerhalb des Toleranzbereiches des jeweiligen dazugehörigen Sollwertes liegt.

Die Messstelle P2 des Messobjektes 27 weist die Bezeichnung "Fail" auf, d.h., dass der erfasste Messwert an der Messstelle P2 außerhalb des Toleranzbereiches des dazugehörigen Sollwertes liegt. Dadurch wird für das Bedienpersonal in einfacher Weise erkennbar, welches Messobjekt 27 auf dem Messtisch 21 ein Gut- oder Schlechtteil ist. Auch wird in einfacher Weise erkannt, welche Messstelle am Messobjekt 27 die Anforderungen nicht erfüllt.

Diese Darstellung des Messergebnisses für das Messobjekt 27 gemäß Figur 5 weist den Vorteil auf, dass einfacherweise auch Rückschlüsse auf die außerhalb des vorgegebenen Toleranzbereiches liegenden Messstellen gegeben ist. Alternativ kann anstelle der Darstellung der Messergebnisse für die durchgeführte Messaufgabe auch eine tabellarische Darstellung der Messpunkte mit den dazugehörigen Zahlen ausgegeben werden. Beispielsweise kann eine farbige Hinterlegung der Messergebnisse erfolgen, indem die grün hinterlegten Messstellen und/oder Messwerte als innerhalb des Toleranzbereiches liegende Messpunkte dargestellt werden und beispielsweise rot hinterlegte Messstellen und/oder als außerhalb des Toleranzbereiches liegend gekennzeichnet werden.

In dem in Figur 6 dargestellten Ablaufprogramm wird ein Verfahren zur automatisierten Messung von mindestens einem Messobjekt 27 mit einem Messgerät 11 mittels Röntgenfluoreszenz beschrieben. Dabei kann das Messgerät 11 sowohl zur Messung der Dicke dünner Schichten auf dem Messobjekt 27, also zur Schichtdickenanalyse, als auch zur Materialanalyse eingesetzt werden. Der nachfolgende beschriebene Ablauf bleibt gleich.

Das Messgerät 11 wird im Schritt 51 in eine Startposition für die nachfolgende Messaufgabe übergeführt. Diese Startposition ist in Figur 1 dargestellt. Das Gehäuse 12 ist geöffnet und der Messtisch 21 gegenüber dem Gehäuse 12 zumindest teilweise ausgefahren und in der Be- und Entladeposition 35 angeordnet. Ausgehend von dieser Startposition wird der Messtisch 21 mit einem oder mehreren Messobjekten 27 bestückt.

Darauffolgend wird im Schritt 52 das Tastelement 36 am Gehäuse 12 betätigt, um die automatisierte Messung durchzuführen.

In einem darauffolgenden Schritt 53 wird der Messtisch 21 in die Arbeitsposition 37 übergeführt und der Gehäusedeckel 16 mittels dem Motor 34 geschlossen. Nachdem der Messraum 18 gegenüber der Umgebung vollständig abgeschlossen ist, generiert die optische Einrichtung 33 in einem Schritt 54 ein Übersichtsbild von dem Messtisch 21 mit dem zumindest einem darauf aufliegenden Messobjekt 27 und wertet dieses Übersichtsbild aus. Die Auswertung des Übersichtsbildes, welches beispielsweise in Figur 3 dargestellt ist, kann mittels der Datenverarbeitungseinrichtung 32 erfolgen, in welcher die charakteristischen Daten des Messobjektes 27 abgespeichert sein können, sodass durch eine Auswertung der erfassten Bildpunkte das zumindest eine auf dem Messtisch 21 aufliegende Messobjekt 27 ermittelt werden kann.

Sofern auf dem Messtisch 27 eine Kennung 38 aufgelegt ist oder auf dem Messobjekt 27 selbst eine Kennung 38 aufgebracht ist, kann diese ausgelesen und zumindest der Typ des Messobjektes 27 dadurch erfasst werden. In Abhängigkeit des erfassten Typs des Messobjektes 27 wird die Messaufgabe ausgewählt und diese entsprechend aus der Datenverarbeitungseinrichtung 32 aufgerufen. Auch kann die Messaufgabe aus der Kennung 38 ermittelt werden.

In einem weiteren Schritt 55 wird aus dem Übersichtsbild gemäß Figur 3 die Lage und/oder die Ausrichtung bzw. die Orientierung des zumindest einen Messobjektes 27 durch Bildverarbeitungsalgorithmen ermittelt.

Bevor die Messaufgabe zur Durchführung der Messung der einzelnen Messobjekte 27 durchgeführt wird, kann eine Kalibrierroutine für das Messgerät 11 gestartet werden. Bei dieser Kalibrierroutine können ein oder mehrere Kalibriernormale, die ebenfalls auf dem Messtisch 21 positioniert sein können, relativ zum Messpunkt 26 übergeführt werden, um die Röntgenfluoreszenzeinrichtung 23 auf die nachfolgende Messaufgabe zu kalibrieren.

In einem Schritt 56 wird auf Basis der Daten aus Schritt 55 für das jeweilige Messobjekt 27 ein X'-/Y'-Messobjekt-Koordinatensystem festgelegt. Aufgrund der Festlegung des X'-/Y'-Messobjekt-Koordinatensystems können die einzelnen Messstellen, beispielsweise die Messstellen P1 bis P5, festgelegt werden. Darauffolgend wird das X'-/Y'-Messobjekt-Koordinatensystem in ein X'-/Y'-Messtisch-Koordinatensystem transformiert. Anschließend werden die einzelnen Messstellen P1 bis P5 des jeweiligen Messobjektes 27 durch eine Verfahrbewegung des Messtisches 21 angefahren.

In einem darauffolgenden Schritt 57 werden die Messwerte der einzelnen Messstellen P1 bis P5 des jeweiligen Messobjektes 27 erfasst und in der Datenverarbeitungseinrichtung 32 ausgewertet. Die Auswertung erfolgt anhand von vorgegebenen Sollwerten, denen Toleranzbereiche zugeordnet werden können. Die Toleranzbereiche bzw. Toleranzwerte an den einzelnen Messstellen P1 bis P5 können durch den Anwender bestimmt und einzeln sowie unabhängig voneinander zugeordnet werden. Dies kann der Anwender über einen Prüfplan selbst vor Beginn der Messaufgabe festlegen. Beispielsweise kann den Messstellen P1, P2 und P3 ein Toleranzbereich von beispielsweise 10 % zugeordnet werden und den Messstellen P4 und P5 ein größerer oder kleinerer prozentualer Toleranzbereich zugeordnet werden. Dies kann auch in Abhängigkeit der jeweiligen Funktion der Messstelle des Messobjektes 27 liegen.

In einem weiteren Schritt 58 werden die Messergebnisse protokolliert und ausgegeben. Beispielsweise kann in einem Display oder einer Anzeige eine Ausgabe der Messergebnisse gemäß Figur 5 erfolgen. Alternativ kann auch eine tabellarische Ausgabe der Messergebnisse mit einer gleichzeitigen Bewertung über Gut- und Schlechtteile bzw. einer Bewertung der Messstelle erfolgen. Diese Gut- und Schlechtausgabe kann auch durch eine Farbmarkierung gekennzeichnet sein.

In einem Schritt 59 wird beispielsweise der Gehäusedeckel 16 geöffnet und der Messtisch 21 in die Be- und Entladeposition 35 übergeführt. Die Messobjekte 27 werden von dem Messtisch 21 entnommen und entsprechend der Bewertung als Gut- oder Schlechtteil sortiert. Darauffolgend kann eine neue Messung mit dem Messgerät 11 durchgeführt werden.

## Patentansprüche

1. Verfahren zur Messung von Messobjekten (27) auf einem Messtisch (21) eines Messgerätes (11) mittels Röntgenfluoreszenz,
- bei dem auf den Messtisch (21) zumindest ein Messobjekt (27) aufgelegt wird,
- bei dem von zumindest einem Bereich des Messtisches (21), auf dem das zumindest eine Messobjekt (27) aufliegt, ein Übersichtsbild mit einer optischen Einrichtung (33) erfasst wird,
- bei dem der Typ des Messobjektes (27) aus dem Übersichtsbild oder aus einer Kennung (38), die auf dem zumindest einem Messobjekt (27) vorgesehen oder benachbart dazu auf dem Messtisch (21) positioniert ist, ermittelt wird,
- dem die Lage und/oder die Ausrichtung des zumindest eine Messobjektes (27) auf dem Messtisch (21) aus dem Übersichtsbild ermittelt wird,
- bei dem für das zumindest eine erfasste Messobjekt (27) eine in einer Datenverarbeitungseinrichtung 32 abgespeicherte Messaufgabe ausgewählt und gestartet wird,
- bei dem zumindest eine Messstelle (P1, P2, P3, P4, P5) des zumindest einen Messobjektes (27) zu einem Messpunkt (26) einer Röntgenfluoreszenzrichtung (23) ausgerichtet und von der zumindest einen Messstelle (P1, P2, P3, P4, P5) des Messobjektes (27) zumindest ein Messwert ermittelt wird, und
- bei dem der zumindest eine Messwert der zumindest einen Messstelle (P1, P2, P3, P4, P5) des Messobjektes (27) mit einem in der Datenverarbeitungseinrichtung (32) hinterlegten Sollwert verglichen und das jeweilige Messergebnis für die zumindest eine Messstelle (P1, P2, P3, P4, P5) des Messobjektes (27) ausgegeben wird.

2. Verfahren nach Anspruch 1, **dadurch gekennzeichnet, dass** von dem gesamten Messtisch (21) ein Übersichtsbild durch die optische Einrichtung (33) erfasst wird.

3. Verfahren nach Anspruch 1 oder 2, **dadurch gekennzeichnet, dass** bei der Erkennung einer auf dem Messtisch (21) aufgelegten oder einer auf dem Messobjekt (27) vorgesehenen Kennung (38) diese Kennung (38) ausgelesen und die in der Kennung (38) abgelegte Messaufgabe aus der Datenverarbeitungseinrichtung (32) ausgelesen und durch die Steuerungseinrichtung (31) gestartet und durchgeführt wird.

4. Verfahren nach einem der vorhergegangenen Ansprüche, **dadurch gekennzeichnet, dass** vor dem Beginn der Messung der zumindest einen Messstelle (P1, P2, P3, P4, P5) des Messobjektes (27) für die jeweilige Messaufgabe ein Toleranzbereich der zumindest einen Messstelle (P1, P2, P3, P4, P5) zugeordnet wird.

5. Verfahren nach einem der vorhergegangenen Ansprüche, **dadurch gekennzeichnet, dass** die Lage und/oder die Ausrichtung des Messobjektes (27) in einem X'-/Y'-Messobjekt-Koordinatensystem ermittelt wird und das X'-/Y'-Messobjekt-Koordinatensystem durch eine Transformation in ein X-/Y-Messtisch-Koordinatensystem übergeführt wird.

6. Verfahren nach Anspruch 5, **dadurch gekennzeichnet, dass** nach der Transformation des X'-/Y'-Messobjekt-Koordinatensystems in das X-/Y-Messtisch-Koordinatensystem die zumindest eine Messstelle (P1, P2, P3, P4, P5) des zumindest ein Messobjektes (27) durch eine Verfahrbewegung des Messtisches (21) in einer X- und/oder Y-Richtung durch die Steuerungseinrichtung (31) angesteuert und aufeinanderfolgend zu dem Messpunkt (26) ausgerichtet wird.

7. Verfahren nach einem der vorhergegangenen Ansprüche, **dadurch gekennzeichnet, dass** die von der zumindest einen Messstelle (P1, P2, P3, P4, P5) des jeweiligen Messobjektes (27) ermittelten Messergebnisse mit einer den Messstellen (P1, P2, P3, P4, P5) zugeordneten Gut- oder Schlechtanzeige ausgegeben werden.

8. Verfahren nach Anspruch 7, **dadurch gekennzeichnet, dass** in dem durch die optische Einrichtung (33) ermittelten Übersichtsbild, welches zumindest einen Bereich des Messtisches (21) mit dem zumindest einen Messobjekt (27) umfasst, dem zumindest einen Messpunkt (P1, P2, P3, P4, P5) des Messobjektes (27) zugeordnet die Gut- oder Schlechtanzeige ausgegeben wird, und vorzugsweise zusätzlich an der jeweiligen Messstelle (P1, P2, P3, P4, P5) des Messobjektes (27) der ermittelte Messwert angezeigt wird.

9. Verfahren nach einem der vorhergegangenen Ansprüche, **dadurch gekennzeichnet, dass** nach der Erfassung oder der Ermittlung der durchzuführenden Messaufgabe eine Kalibrierung des Messgerätes (11) in Abhängigkeit der durchzuführenden Messaufgabe angesteuert und durchgeführt wird, bevor die Messaufgabe gestartet wird.

10. Verfahren nach einem der vorhergegangenen Ansprüche, **dadurch gekennzeichnet, dass** zu Beginn der durchzuführenden Messaufgabe ein Messraum (18) des Gehäuses (12) geöffnet wird und nach dem Bestücken des Messtisches (21) mit dem zumindest einem Messobjekt (27) durch ein Startsignal die Messaufgabe gestartet wird und zunächst der Messraum (18) des Gehäuses (12) geschlossen wird, die Messungen entsprechend der Messaufgabe durchgeführt und nach der Durchführung der Messaufgabe der Messraum (18) des Gehäuses (12) zur Entnahme des zumindest einen Messobjektes (27) geöffnet wird.

11. Verfahren nach Anspruch 10, **dadurch gekennzeichnet, dass** der Messraum (18) des Gehäuses (12) durch einen schwenkbar, verschiebbar oder verfahrbar angesteuerten Gehäusedeckel (16) mit einem Motor (34) geöffnet oder geschlossen wird.

12. Verfahren nach Anspruch 10 oder 11, **dadurch gekennzeichnet, dass** der Messtisch (21) zum Be- und Entladen des zumindest einen Messobjektes (27) in eine Be- und Entladeposition (35) verfahren wird, in welcher der Messtisch (21) zumindest teilweise aus dem verschließbaren Messraum (18) des Gehäuses (12) herausgeführt ist, und dass zur Durchführung der Messaufgabe der Messtisch (21) in eine Arbeitsposition (37) verfahren wird, welche sich innerhalb des Messraumes (18) befindet.

13. Verfahren nach einem der vorhergehenden Ansprüche, **dadurch gekennzeichnet, dass** die durchzuführende Messaufgabe durch ein Tastelement (36) am Gehäuse (12) gestartet wird.

14. Messgerät zur Messung von Messobjekten (27) mittels Röntgenfluoreszenz,
- mit einem Gehäuse (12),
- mit einem in dem Gehäuse (12) vorgesehenen Messtisch (21), der relativ zu einem Messpunkt (26) in dem Gehäuse (12) verfahrbar ist,
- mit einer Röntgenfluoreszenzeinrichtung (23), welche eine Strahlungsquelle (24) und einen Detektor (28) umfasst, die zu dem Messpunkt (26) ausgerichtet sind,
- mit einem Gehäusedeckel (16) oder einer Gehäuseöffnung zum Öffnen und Schließen eines Messraumes (18) in dem Gehäuse (12), wobei der Messtisch (21) bei einem geöffneten Gehäuse (12) zu Be- und Entladen des Messtisches (21) mit dem zumindest einem Messobjekt (27) zugänglich ist,
**dadurch gekennzeichnet,**
- **dass** eine Steuerungseinrichtung (31) zur Durchführung des Verfahrens nach einem der Ansprüche 1 bis 13 vorgesehen ist.
